# EUROPÄISCHE PATENTANMELDUNG

(11) **EP 2 481 582 A1**
(43) Veröffentlichungstag der Anmeldung: **01.08.2012**
(21) Anmeldenummer: 11152315.5
(22) Anmeldetag: 27.01.2011
(51) Int. Cl.: B32B 37/12, B32B 3/18, E04C 2/36

(54) **Sandwichartig aufgebautes Dämmpaneel oder Fassadenplatte und Verfahren zur Herstellung**

(71) Anmelder: Sika Technology AG, 6340 Baar (CH)
(72) Erfinder: Knapp, Wolf Dieter, 65520 Bad Camberg (DE)
(74) Vertreter: Sika Patent Attorneys

(57) **Zusammenfassung**

Die Erfindung betrifft ein Verfahren zur Herstellung stabiler sandwichartig aufgebauter Dämmpaneele oder Fassadenplatten, wobei eine Dämmschicht (1) mit einer Vielzahl von durchgehenden Verbindungsöffnungen (6) versehen wird und die Verbindungsöffnungen (6) mit einem Klebstoff verfüllt werden und auf beide Außenseiten der Dämmschicht je eine Deckplatte (2, 3) aufgeklebt wird. Weiterhin betrifft die Erfindung ein sandwichartig aufgebautes Dämmpaneel oder eine Fassadenplatte mit zwei außen angeordneten Deckplatten (2, 3) und einer dazwischen liegenden Dämmschicht (1), wobei die Dämmschicht (1) eine Vielzahl von Seite zu Seite durchgehende Verbindungsöffnungen (6) aufweist, die mit Klebstoff ausgefüllt sind und damit das Sandwichgebilde stabilisieren.

## Beschreibung

### Technisches Gebiet

Die Erfindung betrifft ein sandwichartig aufgebautes Dämmpaneel oder eine Fassadenplatte mit einer Dämmschicht und zwei diese Dämmschicht umgebenden Deckplatten, einschließlich einem Verfahren zur Herstellung dieser Dämmpaneele oder Fassadenplatten.

### Stand der Technik

Im Bereich der Bautechnik sind allgemein sandwichartig aufgebaute Paneele bekannt, bei denen zwischen zwei Deckplatten eine meist wesentlich dickere Dämmschicht angebracht ist. Die beiden Deckplatten dienen dabei dazu, derartigen Sandwichelementen eine relativ hohe mechanische Festigkeit zu geben und das gesamte Sandwichelement wetterfest und gegenüber mechanischen Einwirkungen unempfindlich auszugestalten. Meist werden die beiden Deckschichten mit Hilfe eines Klebstoffes auf die Dämmschicht aufgeklebt.

Ein Problem bei derartigen Sandwichelementen besteht im Stand der Technik darin, dass die verwendeten Dämmmaterialien für die Dämmschicht meist gegenüber mechanischen Beanspruchungen relativ empfindlich sind, weshalb auch entsprechende Deckschichten zusätzlich aufgebracht werden. Sollen solche sandwichartig ausgestalteten Paneele bei einem Transport einschließlich der Verladevorgänge und dem späteren Handling zum Anbringen solcher Paneele an Außenwänden oder Innenfassaden transportiert oder verarbeitet werden, so treten häufig Schäden an solchen Sandwichelementen auf, bei denen Risse und Brüche entlang der Dämmschicht verlaufen und damit die entsprechenden Paneele nicht mehr verwendbar sind.

### Darstellung der Erfindung

Es ist daher Aufgabe der Erfindung, ein Verfahren zur Herstellung solcher Dämmpaneele oder Fassadenplatten und derartige Dämmpaneele und Fassadenplatten selbst zu finden, bei denen derartige Schäden weitergehend vermieden werden.

Diese Aufgabe wird durch die Merkmale der unabhängigen Patentansprüche gelöst. Vorteilhafte Weiterbildungen der Erfindung sind Gegenstand untergeordneter Ansprüche.

Der Erfinder hat erkannt, dass es mit relativ geringem technischen Aufwand möglich ist, im Rahmen der ohnehin stattfindenden Verklebung der Deckschichten mit einer zentral gelegenen Dämmschicht dafür zu sorgen, dass zwischen den Deckschichten Klebstoffbrücken, die die Dämmschicht durchdringen, entstehen. Solche Klebstoffbrücken, die zum Beispiel durch ein Verfüllen von einer Vielzahl von Löchern in der Dämmschicht mit Hilfe von Klebstoff erzeugt werden können, sorgen für eine wesentlich größere mechanische Stabilität des gesamten Sandwichelementes, so dass auch bei einem späteren Handling beim Transport und am Bau eine Beschädigung solcher Dämmpaneele oder Fassadenplatten durch ein Ausreißen der Dämmschicht kaum mehr vorkommt. Diese als Stabilisatoren wirkenden Klebstoffbrücken sorgen dafür, dass die Scherstabilität des gesamten Dämmpaneels gegenüber den im Stand der Technik bekannten Paneelen mit dazwischen liegenden Dämmstoffschichten um Faktoren größer ist.

Es wird also mit Hilfe dieser Querverbindungen zwischen den Deckschichten eine kraftschlüssige Verbindung zwischen den Deckschichten erzeugt, die die Transportfähigkeit, die Schneidfähigkeit ohne Querbruch und die sonstige Festigkeit bei einer bauseitigen Handhabung wesentlich erhöht.

Entsprechend diesem Grundgedanken schlägt der Erfinder ein Verfahren zur Herstellung von sandwichartig aufgebauten Dämmpaneelen oder Fassadenplatten, welche an einer Hauswand montierbar sind, vor, wobei mindestens eine Dämmschicht mit zwei flachen Seiten und einer Vielzahl von Verbindungsöffnungen, welche die Dämmschicht von einer Seite zur anderen Seite durchdringen, in den Verbindungsöffnungen mit einem Klebstoff verfüllt wird, so dass feste Materialbrücken entstehen, welche die mindestens eine Dämmschicht durchdringen, und auf beide Außenseiten der mindestens einen Dämmschicht je eine Deckplatte derart aufgeklebt wird, dass die beiden Deckplatten durch die Materialbrücken miteinander verbunden sind.

Vorteilhaft kann die Herstellung der Verbindungsöffnungen in einem Arbeitsprozess mit der Verfüllung der Verbindungsöffnungen erfolgen, beispielsweise indem ein Werkzeug verwendet wird, welches gleichzeitig die Verbindungsöffnungen ausstanzt oder ausbohrt und beim Herausfahren aus der Dämmschicht die entstandene Öffnung wieder mit einem Klebstoff füllt. Andererseits besteht auch die Möglichkeit, die Verbindungsöffnungen durch einen separaten Arbeitsprozess, beispielsweise durch Stanzen, Bohren, Schneiden oder Pressen zu erzeugen.

Der Klebstoff kann hierbei mit Hilfe einer Vielzahl von Düsen in die Verbindungsöffnungen eingebracht werden.

Weiterhin kann die Verklebung zwischen der mindestens einen Dämmschicht und den Deckplatten vollflächig erfolgen, so dass auf jeden Fall eine sich aushärtende Verbindung zwischen den festen Verbindungsbrücken und den Deckplatten, die die Dämmschicht zweiseitig umgeben, entsteht.

Neben dem oben beschriebenen erfindungsgemäßen Verfahren schlägt der Erfinder auch ein sandwichartig aufgebautes Dämmpaneel oder eine Fassadenplatte vor, welche aufweist:
- eine erste Deckplatte, bestehend aus einem, relativ zu einer damit verbundenen Dämmschicht, harten Material,
- eine Dämmschicht, welche eine Vielzahl von Seite zu Seite durchgehenden Verbindungsöffnungen aufweist, in welchen sich durchgehende mit der Dämmschicht verklebte Stabilisatoren befinden, und
- eine zweite Deckplatte, bestehend aus einem, relativ zur damit verbundenen Dämmschicht, harten Material,
- wobei die beiden Deckplatten jeweils mit den Außenseiten der Dämmschicht verklebt sind.

Diese erfindungsgemäßen Stabilisatoren, die die beiden Deckschichten miteinander verbinden, können beispielsweise ausschließlich aus einem in die Verbindungsöffnungen der Dämmschicht gefüllten und ausgehärteten Klebstoff bestehen.

Alternativ besteht jedoch auch die Möglichkeit, in diese Verbindungsöffnungen zusätzlich Kunststoffbrücken einzulassen, die ebenfalls in Verbindung mit der Aufklebung der beiden Deckschichten zu einer festen Verbindung zwischen den beiden Deckschichten führen und die dazwischen liegende Dämmschicht entsprechend stabilisieren.

Die Verbindungsöffnungen sind insbesondere in regelmäßigen Abständen zueinander angeordnet, wobei der gewählte Abstand typischerweise abhängig ist vom Material und der Beschaffenheit der Dämmschicht.

Weiterhin können die Verbindungsöffnungen insbesondere einen runden Querschnitt aufweisen oder aber eckig oder schlitzförmig ausgeführt sein.

Erfindungsgemäß kann das Dämmpaneel oder die Fassadenplatte so ausgestaltet sein, dass mindestens eine der Deckplatten aus Gips-Karton, einer zementgebundenen Platte, Naturstein, Ornamentpaneele oder einer Metallsandwich-Platte besteht. Die Auswahl des jeweiligen Stoffes für die Deckplatte wird dabei abhängig vom Einsatzort des jeweiligen Dämmpaneels beziehungsweise der Fassadenplatte sein. So kann beispielsweise das erfindungsgemäße Dämmpaneel beziehungsweise die erfindungsgemäße Fassadenplatte an der Außenfassade, im Innenausbau, beim Brandschutz, zu reiner Wärmedämmung oder in Kombination mit den vorherigen Anwendungen eingesetzt werden. Besonders günstig ist beispielsweise eine Variante, bei der die Dämmschicht einerseits mit einer zementgebunden Außenplatte versehen wird und die andere Deckplatte als Gips-Karton ausgeführt wird.

Als Dämmschicht können alle bekannten Dämmstoffe, beispielsweise erdölbasierte Dämmstoff, mineralische Dämmstoff oder nachwachsende Dämmstoff verwendet werden. Der erfindungsgemäße Effekt der Stabilisierung des gesamten Paneels wird besonders bei sehr porösem Material mit geringer Eigenfestigkeit wirksam.

Wie bereits oben erwähnt, sollte die Dämmschicht und die Deckplatten möglichst vollflächig miteinander verklebt sein, wobei meist die Dämmschicht eine größere Dicke aufweist als eine der Deckplatten.

Grundsätzlich können beide Deckplatten sowohl aus gleichem als auch aus unterschiedlichem Material -je nach den aktuellen Erfordernissen - ausgeführt werden, wobei beispielsweise auch feuerfeste Materialien verwendet werden können.

Besonders günstig ist es dabei, wenn der verwendete Klebstoff ein 2-Komponentenklebstoff ist, da hierdurch die Verarbeitungszeit und insbesondere die Aushärtungszeit der Klebstoffbrücken gezielt gesteuert werden kann.

Schließlich ist es auch besonders günstig, wenn der verwendete Klebstoff zum Verkleben und/oder Erzeugen der Stabilisatoren und der Klebstoff zum Verkleben der Deckplatten der gleiche ist, damit eine möglichst gute Verträglichkeit und optimale Verbindung erreicht wird.

### Kurze Beschreibung der Zeichnungen

Im Folgenden wird die Erfindung anhand eines bevorzugten Ausführungsbeispieles mit Hilfe der Figuren näher beschrieben, wobei nur die zum Verständnis der Erfindung notwendigen Merkmale dargestellt sind. Selbstverständlich ist die Erfindung nicht auf gezeigte und beschriebene Ausführungsbeispiele beschränkt.

Es zeigen im Einzelnen:
- FIG 1:: Querschnitt durch ein Dämmpaneel gemäß dem Stand der Technik;
- FIG 2:: Querschnitt durch ein erfindungsgemäßes Dämmpaneel mit Stabilisatoren aus Klebstoff;
- FIG 3:: Querschnitt durch ein erfindungsgemäßes Dämmpaneel mit Stabilisatoren aus Klebstoff mit zusätzlichen Kunststoffelementen;
- FIG 4:: 3D-Ansicht auf eine Dämmschicht mit eingeprägten Verbindungsöffnungen;
- FIG 5:: 3D-Ansicht auf eine Dämmschicht, welche mit Klebstoff ausgefüllte Verbindungsöffnungen aufweist;
- FIG 6:: Erfindungsgemäßes Dämmpaneel in schräger 3D-Ansicht.

### Wege zur Ausführung der Erfindung

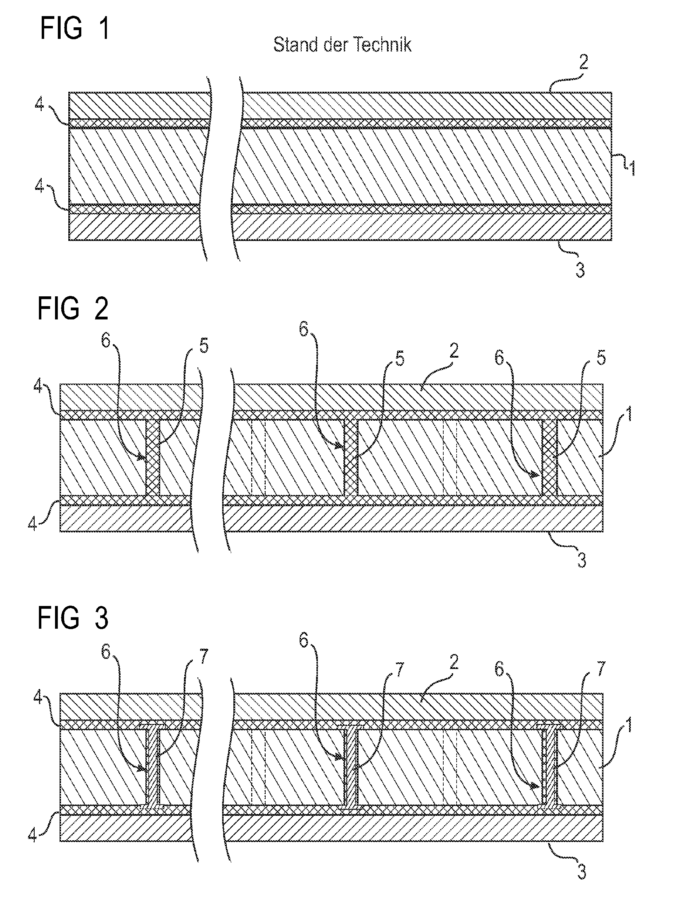

Die **Figur 1** zeigt im Querschnitt ein sandwichartiges Dämmpaneel, wie es im Stand der Technik üblich ist. Dieses besteht aus einer zentralen Dämmschicht 1, an welcher auf beiden Seiten zwei Deckplatten 2 und 3 mit Hilfe eines dazwischen liegenden Klebstoffes 4 angeklebt sind. Derartige Dämmstoffpaneele haben das Problem, dass die Dämmschicht 1 relativ geringe mechanische Festigkeiten aufweist, so dass zum Beispiel wenn ein solches Paneel schräg aufgesetzt wird, es sehr häufig zu quer durch die Dämmschicht gehenden Rissen kommt, so dass sich die Deckplatte 2 von der Deckplatte 3, jeweils mit Teilen von der Dämmschicht versehen, löst. Hierdurch wird das Handling solcher Dämmpaneele relativ schwierig. Es besteht dabei auch das Problem, dass zum Beispiel im Falle eines Anbringens eines solchen Paneels an einer Wand, wobei ausschließlich eine der Deckplatten 2 oder 3 an der Wand befestigt wird, es relativ einfach zu einem Ablösen der jeweils anderen Deckplatte aus dem Paneel kommt und somit an einer Fassade entsprechende Schäden entstehen.

Erfindungsgemäß würde dies dadurch gelöst, dass das entsprechende Dämmpaneel ausgeführt wird, wie es in der **Figur 2** gezeigt ist. Dieses erfindungsgemäße Dämmpaneel zeigt wiederum eine zentral gelegene Dämmschicht 1. In diesem Fall führen jedoch durch diese Dämmschicht 1 eine Vielzahl von Verbindungsöffnungen 6. Diese Verbindungsöffnungen 6 werden mit einem Klebstoff gefüllt, so dass eine Klebstoffbrücke 5 zwischen den beiden Seiten der Dämmschicht 1 entsteht. Werden nun die beiden Deckplatten 2 und 3 mit Hilfe einer weiteren Klebstoffschicht 4 an der Dämmschicht 1 aufgeklebt, so entsteht eine relativ feste und vor allem scherfeste Verbindung zwischen den beiden Deckplatten 2 und 3. Bei einer solchen Ausführung eines Dämmpaneels können ziemliche hohe Scherkräfte vom gesamten Sandwichsystem aufgenommen werden, so dass beispielsweise auch durch eine Befestigung der gesamten Sandwichplatte mit Hilfe lediglich einer Verschraubung auf einer der Deckplatten 2 oder 3 das gesamte System sehr sicher zum Beispiel an einer Wand befestigt werden kann. Hierdurch können sehr einfach nach außen unsichtbare Befestigungen erzeugt werden, die den optischen Eindruck einer Fassade nicht stören.

Eine andere Variante einer erfindungsgemäßen sandwichartig aufgebauten Fassadenplatte ist in der **Figur 3** gezeigt. Diese entspricht im Grundsatz der Ausführung der Figur 2, jedoch ist zusätzlich im Bereich der durchgehenden Verbindungsöffnungen 6 ein Kunststoffeinsatz 7 angeordnet, der zum Beispiel zu Materialeinsparungen bezüglich des verwendeten Klebstoffes führt.

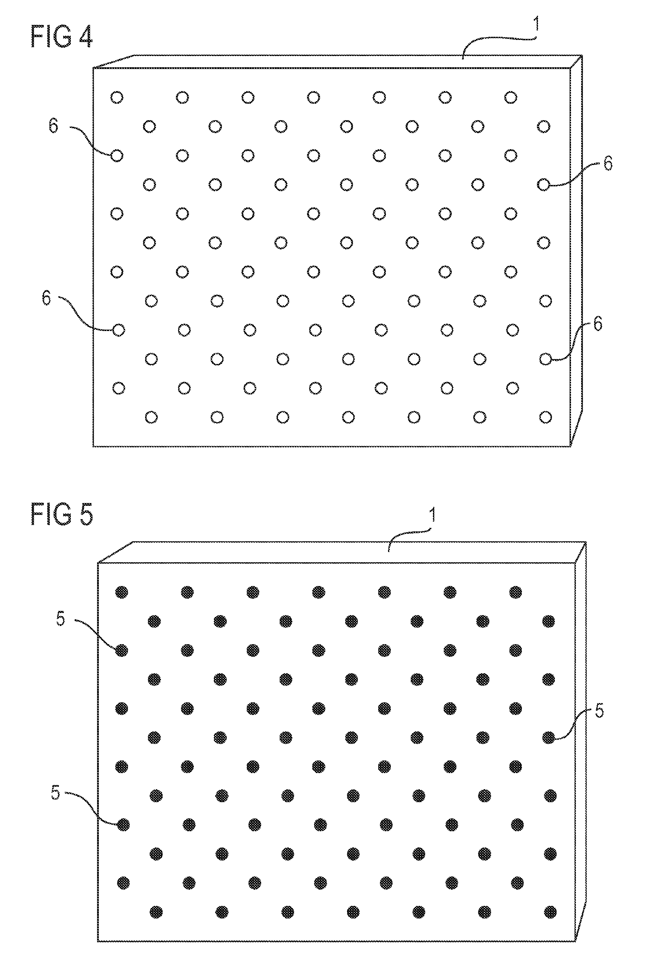

Eine schräge 3D-Ansicht der erfindungsgemäßen Dämmschicht 1 ist in den Figuren 4 und 5 gezeigt. Wobei in der **Figur 4** die Dämmschicht 1 lediglich mit einer Vielzahl von Verbindungsöffnungen 6 versehen ist, während in der **Figur 5** diese Verbindungsöffnungen 6 bereits durch einen eingebrachten Klebstoff verfüllt sind, so dass entsprechende stabilisierende Klebstoffverbindungen erzeugt wurden.

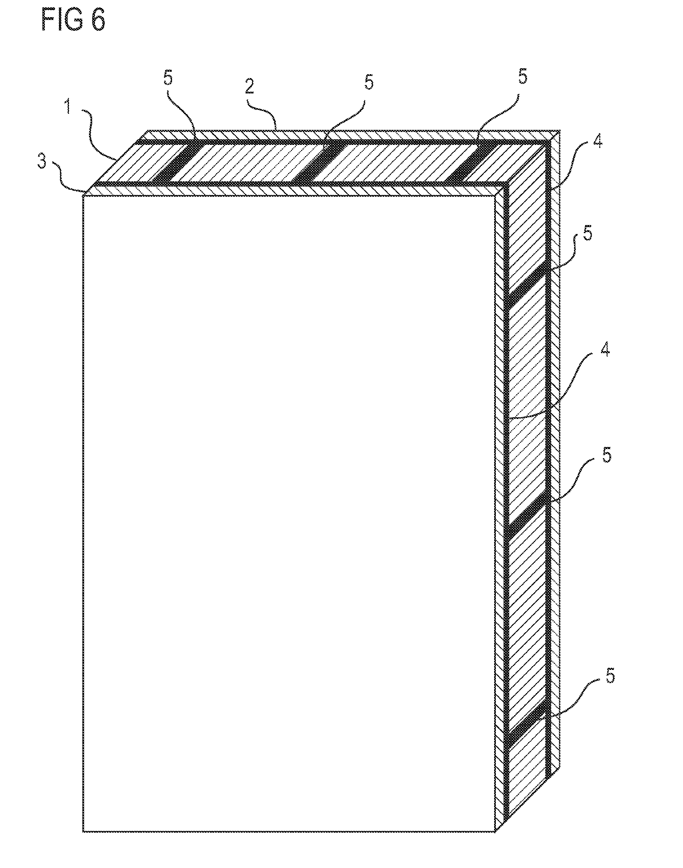

Schließlich zeigt die **Figur 6** einen Ausschnitt aus einem erfindungsgemäßen Dämmpaneel in einer 3D-Ansicht. Hier ist auf der Rückseite zunächst eine erste Deckplatte 2 zu erkennen. An diese schließt sich eine dünne Klebstoffschicht 4 an, mit Hilfe der die Deckplatte 2 mit der Dämmschicht 1 verklebt ist. In der Dämmschicht 1 sind eine Vielzahl von Verbindungsöffnungen 6 angeordnet, in denen sich der Klebstoff befindet, so dass die Klebstoffbrücken 5 entstehen, die schließlich die beiden Seiten der Deckschicht verbinden. Auf der oberen Seite der Dämmschicht 1 befindet sich wieder eine Klebstoffschicht 4, auf der schließlich die zweite Deckplatte 3 angeordnet ist und damit mit der Dämmschicht 1 verklebt wurde.

Durch diesen Aufbau des Dämmpaneels wird eine große Stabilität erzeugt, bei der sogar sehr lockere Dämmschichten mit geringer mechanischer Eigenstabilität verwendet werden, die trotzdem in Verbindung mit den beiden Deckplatten 2 und 3 und den dazwischen angeordneten Verbindungsbrücken aus Klebstoff eine sehr stabile Anordnung bilden.

Insgesamt wird also mit der Erfindung ein einfaches Verfahren zur Herstellung stabiler sandwichartig aufgebauter Dämmpaneele oder Fassadenplatten vorgestellt, wobei eine Dämmschicht mit einer Vielzahl von durchgehenden Verbindungsöffnungen versehen wird und die Verbindungsöffnungen mit einem Klebstoff verfüllt werden und auf beide Außenseiten der Dämmschicht je eine Deckplatte aufgeklebt wird. Weiterhin wird durch die Erfindung ein sandwichartig aufgebautes Dämmpaneel oder Fassadenplatte vorgestellt, mit zwei außen angeordneten Deckplatten und einer dazwischen liegenden Dämmschicht, wobei die Dämmschicht eine Vielzahl von Seite zu Seite durchgehende Verbindungsöffnungen aufweist, die mit Klebstoff ausgefüllt sind und damit das Sandwichgebilde stabilisieren.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

### Bezugszeichenliste

- 1: Dämmschicht
- 2: erste Deckplatte
- 3: zweite Deckplatte
- 4: Klebstoffschicht
- 5: Klebestoffbrücke / Stabilisator
- 6: Verbindungsöffnung
- 7: Kunststoffeinsatz

## Patentansprüche

1. Verfahren zur Herstellung von sandwichartig aufgebauten Dämmpaneelen oder Fassadenplatten, wobei:
1.1. mindestens eine Dämmschicht (1) mit zwei flachen Seiten und einer Vielzahl von Verbindungsöffnungen (6), welche die Dämmschicht (1) von einer Seite zur anderen Seite durchdringen, in den Verbindungsöffnungen (6) mit einem Klebstoff (5) verfüllt wird, so dass feste Stabilisatoren (5) entstehen, welche die mindestens eine Dämmschicht durchdringen, und
1.2. auf beide Außenseiten der mindestens einen Dämmschicht (1) je eine Deckplatte (2, 3) derart aufgeklebt wird, dass die beiden Deckplatten (2, 3) durch die Stabilisatoren (5, 7) verbunden sind.

2. Verfahren gemäß dem voranstehenden Patentanspruch 1,
**dadurch gekennzeichnet**,dassdieHerstellungder Verbindungsöffnungen (6) in einem Arbeitsprozess mit der Verfüllung der Verbindungsöffnungen (6) erfolgt.

3. Verfahren gemäß dem voranstehenden Patentanspruch 1,
**dadurch gekennzeichnet, dass** die Verbindungsöffnungen (6) durch einen, in der nachfolgenden Liste genannten, Arbeitsprozess erzeugt werden: Stanzen, Bohren, Schneiden, Pressen.

4. Verfahren gemäß einem der voranstehenden Patentansprüche 1 bis 3, **dadurch gekennzeichnet, dass** der Klebstoff mit einer Vielzahl von Düsen in die Verbindungsöffnungen (6) eingebracht wird.

5. Verfahren gemäß einem der voranstehenden Patentansprüche 1 bis 4, **dadurch gekennzeichnet, dass** die Verklebung zwischen der mindestens einen Dämmschicht (1) und den Deckplatten (2, 3) vollflächig erfolgt.

6. Sandwichartig aufgebautes Dämmpaneel oder Fassadenplatte, aufweisend:
6.1. eine erste Deckplatte (2), bestehend aus einem, relativ zu einer damit verbundenen Dämmschicht (1), harten Material,
6.2. eine Dämmschicht (1), welche eine Vielzahl von Seite zu Seite durchgehende Verbindungsöffnungen (6) aufweist, in welchen sich durchgehende mit der Dämmschicht (1) verklebte Stabilisatoren (5) befinden, und
6.3. eine zweite Deckplatte (3), bestehend aus einem, relativ zur damit verbundenen Dämmschicht (1), harten Material,
6.4. wobei die beiden Deckplatten (2, 3) jeweils mit den Außenseiten der Dämmschicht (1) verklebt sind.

7. Dämmpaneel oder Fassadenplatte gemäß dem voranstehenden Patentanspruch 6, **dadurch gekennzeichnet, dass** die Stabilisatoren (5) aus einem in die Verbindungsöffnungen (6) der Dämmschicht (1) gefüllten und ausgehärteten Klebstoff bestehen.

8. Dämmpaneel oder Fassadenplatte gemäß dem voranstehenden Patentanspruch 6, **dadurch gekennzeichnet, dass** die Stabilisatoren (5) in die Verbindungsöffnungen der Dämmschicht (1) eingeklebte Kunststoffbrücken (7) aufweisen.

9. Dämmpaneel oder Fassadenplatte gemäß einem der voranstehenden Patentansprüche 6 bis 8, **dadurch gekennzeichnet, dass** mindestens eine der Deckplatten (2, 3) aus einem der in der nachfolgenden List genannten Materialien besteht: Gips-Karton-Platte, zementgebundene Platte, Naturstein, Ornamentpaneele, Metallsandwich-Platte.

10. Dämmpaneel oder Fassadenplatte gemäß einem der voranstehenden Patentansprüche 6 bis 9, **dadurch gekennzeichnet, dass** die Dämmschicht (1) aus mindestens einem der nachfolgend genannten Materialien besteht: erdölbasiertem Dämmstoff, mineralischem Dämmstoff, nachwachsendem Dämmstoff.

11. Dämmpaneel oder Fassadenplatte gemäß einem der voranstehenden Patentansprüche 6 bis 10, **dadurch gekennzeichnet, dass** die Dämmschicht (1) und die Deckplatten (2, 3) vollflächig miteinander verklebt sind.

12. Dämmpaneel oder Fassadenplatte gemäß einem der voranstehenden Patentansprüche 6 bis 11, **dadurch gekennzeichnet, dass** die Dämmschicht (1) eine größere Dicke aufweist als eine der Deckplatten (2, 3).

13. Dämmpaneel oder Fassadenplatte gemäß einem der voranstehenden Patentansprüche 6 bis 12, **dadurch gekennzeichnet, dass** beiden Deckplatten (2, 3) aus unterschiedlichen Materialien bestehen.

14. Dämmpaneel oder Fassadenplatte gemäß einem der voranstehenden Patentansprüche 6 bis 13, **dadurch gekennzeichnet, dass** alle verwendeten Materialien feuerfest ausgeführt sind.

15. Dämmpaneel oder Fassadenplatte gemäß einem der voranstehenden Patentansprüche 6 bis 14, **dadurch gekennzeichnet, dass** der verwendete Klebstoff ein 2-Komponentenklebstoff ist.
